# EUROPEAN PATENT APPLICATION

(11) **EP 1 280 103 A1**
(43) Date of publication of application: **29.01.2003**
(21) Application number: 02255081.8
(22) Date of filing: 19.07.2002
(51) Int. Cl.: G06K 19/077, G06K 19/07

(54) **Non-contact type IC card and flat coil used therein**

(30) Priority: 23.07.2001 JP 2001221655
(71) Applicant: SHINKO ELECTRIC INDUSTRIES CO. LTD., Nagano-shi, Nagano 380-0921 (JP)
(72) Inventor: Fujii, Tomoharu, c/o Shinko Electric Ind. Co. Ltd., Nagano-shi, Nagano 380-0921 (JP)
(74) Representative: Rackham, Stephen Neil

(57) **Abstract**

A non-contact type IC card, enabling adjustment of an inductance of a flat coil (10) in accordance with the requirements of a product and enabling universal use of a common shape of the flat coil. The flat coil (10) is connected to a semiconductor device (16) electrically connected to terminals (12a,12b) formed at an inner circumference end and an outer circumference end of a coil body (10a) formed by winding a conductor in a flat manner. An adjustment coil (11) extends in a flat spiral shape from at least one of the terminals (12a), and the adjustment coil (11) and the semiconductor device (16) are electrically connected.

## Description

The present invention relates to a non-contact type IC card and a flat coil used therein and, more particularly relates to a non-contact type IC card compatible with various types of products without changing the configuration of the flat coil and a flat coil used therein.

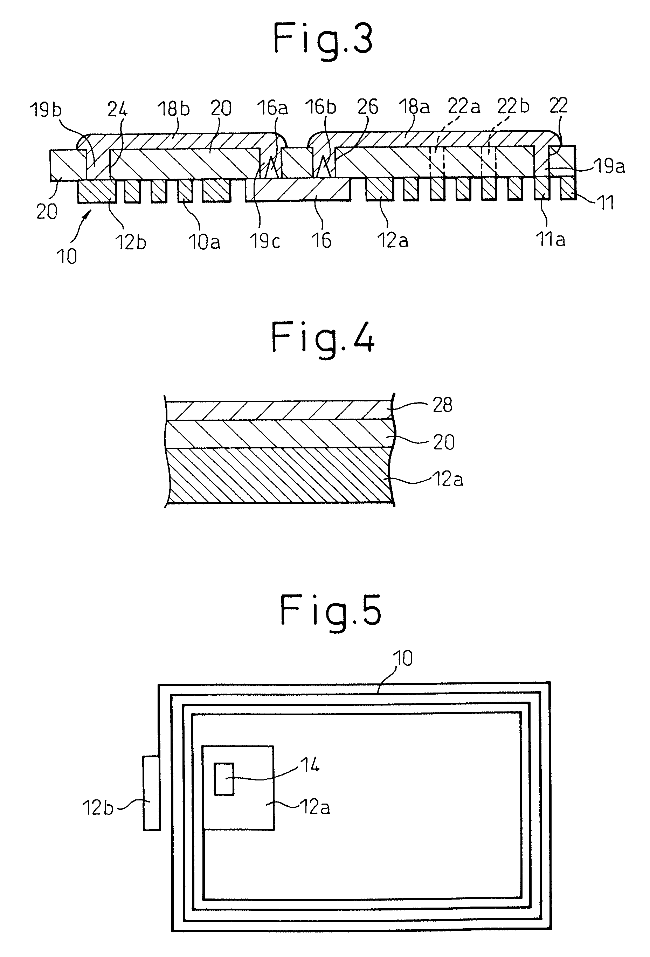

FIG. 5 shows an example of the configuration of a flat coil 10 used for a non-contact type IC card. The flat coil 10 is formed by a conductor wound flatly in a rectangular spiral a predetermined number of turns and having terminals 12a and 12b for electrically connecting a semiconductor device at the two ends of the coil. In the illustrated example, one terminal 12a is formed broad and is formed with a hole 14 for carrying the semiconductor device.

The non-contact type IC card is formed by placing a semiconductor device at the flat coil 10, electrically connecting the semiconductor device and terminals 12a and 12b, and sealing the flat coil 10 and semiconductor device by heating and pressing plastic films from the two sides of the flat coil 10 to form a card shape.

The flat coil 10 of the non-contact type IC card is for the transfer of information by communication between the IC card and a read/write device and is designed in number of turns, conductor diameter, etc. so as to have a resonance frequency matching with that of the read/write device. Note that the method for preparing the flat coil 10 includes the step of punching a metal sheet by a press to form a predetermined coil shape and the step of etching a metal foil to form a predetermined pattern of a flat coil.

The non-contact type IC card is designed to match the resonance frequency of the data read/write device, so the inductance of the flat coil or the capacitance in the circuit is designed in consideration with the read/write device. Therefore, in the past, when the device carried differs or the device used differs, the flat coil is designed and fabricated separately to match the resonance frequency.

Design and fabrication of a flat coil separately for each product, however, is inefficient in terms of the production process and production cost. If an IC card could be universally used for different types of products, it would be extremely efficient.

Note that the resonance frequency of an IC card fluctuates according to the variation in internal capacitance or variation in resistance of the device, so methods for precisely adjusting the resonance frequency have been proposed as follows: forming a circuit portion for adjustment of the inductance in an antenna (Japanese Unexamined Patent Publication (Kokai) No. 2001-10264); adjusting the inductance by leading out a plurality of connection terminals from an antenna and selecting any connection terminal (Japanese Unexamined Patent Publication (Kokai) No. 2000-285214); providing a capacitor or resistor for adjustment in a resonance circuit and adjusting the capacitance value or resistance value to match with the resonance frequency.

These methods modify antennas formed into predetermined shapes by etching etc. to match with predetermined resonance frequencies. They are effective as methods for precisely adjusting the resonance frequency to deal with variations etc. in the capacitance, but are insufficient as methods for dealing with different types of products such as IC cards where the inductance greatly changes.

An object of the present invention is to go at least some way towards meeting the above desiderata or to provide a non-contact type IC card which is able to adjust the inductance of a flat coil in accordance with the product and which enables the shape of the flat coil to be made a common one for universal use and a flat coil used therein.

To achieve the above object, according to a first aspect of the present invention, there is provided a non-contact type IC card carrying a semiconductor device electrically connected to terminals formed at an inner circumference end and outer circumference end of a coil body formed by winding a conductor in a flat manner, wherein an adjustment coil is extended in a flat spiral shape from at least one terminal of the inner circumference end and outer circumference end of the coil body and the adjustment coil and the semiconductor device are electrically connected.

Preferably, the adjustment coil has a plurality of conductors arranged in parallel along the outer surface of the terminal as a connection part for selecting a connection position with the semiconductor device. The connection part thus arranged along the outer surface of the terminal enables easy selection of the connection position at which the semiconductor device and the adjustment coil are connected.

Preferably, the semiconductor device is carried housed in a carrying hole provided in a terminal. Due to this, the IC card can be formed thin and compactly.

Preferably, the surface of each terminal is formed with an electrode forming a capacitor with the terminal through an insulation layer, and the electrode is electrically connected with the flat coil. It is possible to adjust the area of the electrode so as to adjust the capacitance acting on the semiconductor device.

Preferably, the terminal and the surface of the flat coil between the terminal and adjustment coil are covered by an insulation layer, and the semiconductor device and flat coil are electrically connected through vias and wirings, the vias being formed by filling a conductive adhesive in via holes provided in the insulating layer and the wirings being formed of a conductive adhesive on the surface of the insulating layer.

According to a second aspect of the present invention, there is provided a flat coil used for a non-contact type IC card formed with terminals electrically connected to a semiconductor device at an inner circumference end and outer circumference end of a coil body formed by winding a conductor in a flat manner, wherein an adjustment coil electrically connected by selection of a connection position with the semiconductor device is extended in a flat spiral shape from at least one terminal of the inner circumference end and outer circumference end of the coil body.

Preferably, the adjustment coil is provided with a connection part comprised of a plurality of conductors arranged in parallel and forming coils along the outer surface of the terminal.

These and other objects and features of the present invention will become clearer from the following description of particular embodiments given with reference to the attached drawings, wherein:
FIG. 1 is a plan view of the configuration of a flat coil of an IC card according to the present invention;
FIG. 2 is a plan view of the state of a semiconductor device carried in a flat coil according to the present invention;
FIG. 3 is a sectional view of the state of a semiconductor device carried in a flat coil according to the present invention;
FIG. 4 is a sectional view of the configuration of an electrode of a flat coil according to the present invention; and
FIG. 5 is a plan view of the configuration of a conventional flat coil.

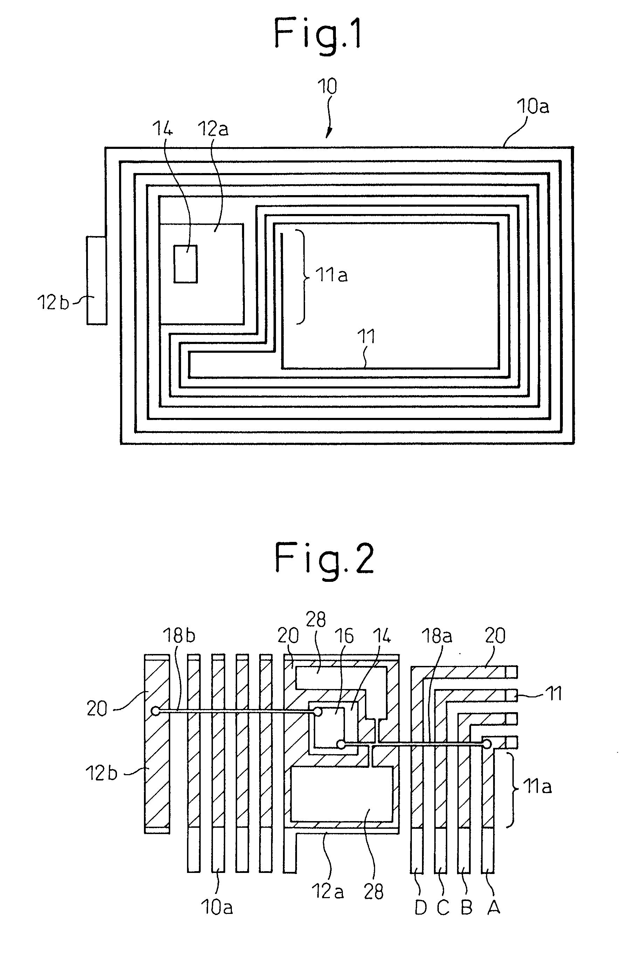

FIG. 1 is a plan view of an example of the configuration of a flat coil 10 used for a non-contact type IC card. The flat coil 10 shown, like the flat coil used in a conventional IC card, is comprised of a conductor wound in a flat rectangular shape and having flat, somewhat broad terminals 12a and 12b formed at the two ends of the conductor. One terminal 12a and another terminal 12b are arranged at positions facing each other across the coil conductor. The terminal 12a is formed with a carrying hole 14, for carrying the semiconductor device, passing through the thickness direction.

The characterizing configuration in the flat coil 10 of the illustrated example is the provision of an adjustment coil 11 comprised of a conductor extending in a flat spiral shape further inside from the terminal 12a formed at the inner circumference end of the coil body 10a. The adjustment coil 11 is provided wound a predetermined number of turns within the coil body 10a and is provided along the outer surface of the terminal 12a with a parallel connection part 11a for electrical connection with the semiconductor device carried at the terminal 12a.

The method of preparing the flat coil 10 is similar to the method of preparing a conventional flat coil. For example, it is possible to use the method of punching a copper or other metal sheet by a press to form a predetermined coil shaped pattern, the method of chemically etching a metal sheet to form a predetermined pattern, or the method of etching the copper foil of a copper foil clad plastic substrate to a predetermined pattern to form a flat coil. By the press stamping or etching, it is possible to easily form a flat coil 10 in any coil pattern.

FIG. 2 shows the state of carrying a semiconductor device 16 at the flat coil 10 and electrically connecting the semiconductor device 16 and flat coil 10.

The semiconductor device 16 is carried accommodated in the carrying hole 14 formed at the terminal 12a. The semiconductor device 16 and flat coil 10 are electrically connected by the wirings 18a and 18b made of conductive paste in the present embodiment.

In a conventional IC card, the semiconductor device 16 and flat coil 10 are connected by the electrodes 16a and 16b (see Fig. 3) of the semiconductor device 16 and the terminals 12a and 12b, but in the IC card of the present embodiment, while the semiconductor device 16 and terminal 12b are connected in the same way as the past, the semiconductor device 16 and the inner circumference side conductor portion are connected by selecting a conductor arranged at the connection part 11a of the adjustment coil 11.

In the example shown in FIG. 2, the semiconductor device 16 and adjustment coil 11 are connected with the innermost conductor A of the adjustment coil 11. The connection part 11a provided at the adjustment coil 11 is provided as the portion for selection of the connection with the semiconductor device 16. In the example shown in FIG. 2, one of the conductors A, B, C, and D is selected to enable electrical connection with the semiconductor device 16.

The inductance of the flat coil 10 acting on the semiconductor device 16 is the inductance part acting on the electrodes 16a and 16b of the semiconductor device 16, so by selecting the position of the connection part 11a connected to the semiconductor device 16, it becomes possible to substantively change the number of turns of the coil and possible to suitably adjust the inductance of the flat coil 10.

The wirings 18a and 18b electrically connecting the semiconductor device 16 and flat coil 10 are arranged so as to laterally cut across the conductors as shown in FIG. 2, so the surface of the flat coil 10 is covered by an insulation layer 20 having an electrical insulation property, then printed with a conductive paste to electrically connect the semiconductor device 16 and flat coil 10. The insulation layer 20 is formed by the step of coating a plastic material having an electrical insulation property, the step of adhering a plastic film, etc.

FIG. 3 shows the state of the semiconductor device 16 carried at the flat coil 10 and the flat coil 10 and semiconductor device 16 electrically connected by the wirings 18a and 18b formed by printing the conductive paste. In this embodiment, an insulating plastic film is adhered to one surface of the flat coil 10 to form the insulation layer 20. Reference numerals 22 and 24 denote via holes provided in the insulation layer 20. The via hole 22 is provided positioned with the connection part 11a of the adjustment coil 11 and the via hole 24 is provided positioned with the outer circumference terminal 12b of the flat coil 10. Further, the via holes 26 are provided in the insulation layer 20 positioned with the electrodes 16a and 16b of the semiconductor device 16. The via holes 22, 24, and 26 can be formed by adhering a plastic film on the flat coil 10, then firing a laser beam or by using a plastic film provided with the via holes 22, 24, and 26 in advance.

The plastic film is adhered, then a conductive paste is printed from the front surface of the plastic film to fill conductive paste in the via holes 22, 24, and 26 and electrically connect the semiconductor device 16 and flat coil 10 through the wirings 18a and 18b and the vias 19a, 19b, and 19c.

As shown in FIG. 3, since the semiconductor device 16 and connection part 11a of the adjustment coil 11 are electrically connected through the via hole 22 formed in the insulation layer 20, by changing the position of the via hole 22 formed in the insulation layer 20, it is possible to connect with a suitable conductor of the connection part 11a. Reference numerals 22a and 22b show the positions of the via holes when connected with other conductors.

In this way, the method of electrically connecting the semiconductor device 16 and flat coil 10 through the via holes 22, 24, and 26 provided in the insulation layer 20 is effective in the point of enabling connection at any position of the connection part 11a of the adjustment coil 11.

As explained above, in the IC card of the present embodiment, the conductor is extended further to the inside of the inner circumference end terminal 12a of the flat coil 10 to form the adjustment coil 11 so as to enable the inductance of the flat coil 10 to be changed by changing the connection position of the semiconductor device 16 and adjustment coil 11. That is, the adjustment coil 11 changes the inductance by changing the contribution of the flat coil 10 as a whole to the inductance. Therefore, in the design of the flat coil 10, it is necessary to determine the number of turns, arrangement, etc. of the adjustment coil 11 and coil body 10a considering the inductance value believed necessary for the different types of semiconductor devices 16 to be carried in the IC card.

Further, by designing the flat coil 10 in this way, even in the case of an IC card carrying a different semiconductor device 16, it is possible to suitably select the connection position of the adjustment coil 11 and semiconductor device 16 to provide an IC card provided with the required inductance value.

Note that in the present embodiment, the conductor extends in a flat spiral shape from the inner circumference end terminal 12a of the coil body 10a to make effective use of the inside area of the coil body 10a to form the adjustment coil 11, but the adjustment coil 11 is not necessarily limited to only the case of provision at the inside of the coil body 10a. That is, it is also possible to adjust the inductance of the flat coil 10 acting on the semiconductor device 16 by providing the adjustment coil extending in a flat spiral shape further outside from the outer circumference end terminal 12b of the coil body 10a and suitably selecting the connection position between the terminal 12b and this adjustment coil. Further, depending on the case, it is also possible to extend adjustment coils from both of the inner circumference end and outer circumference end terminals 12a and 12b of the coil body 10a and select the connection positions between the two adjustment coils and the semiconductor device 16 to electrically connect the flat coil 10 and the semiconductor device 16.

Further, in this embodiment, the semiconductor device 16 was placed at the inner circumference end terminal 12a of the coil body 10a, but it is also possible to place the semiconductor device 16 on the other terminal 12b to electrically connect it with the flat coil 10. This is because the inductance of the flat coil 10 acting on the semiconductor device 16 is only based on the connection positions of the electrodes 16a and 16b of the semiconductor device 16 and the flat coil 10. Further, in the present embodiment, the terminal 12a is provided with a carrying hole 14 and the semiconductor device 16 is housed in the carrying hole 14 to make the IC card thinner, but the invention is not particularly limited to this position of arrangement so long as the semiconductor device 16 can be electrically connected with the terminals 12a and 12b.

Note that the resonance frequency between the IC card and data device is affected by the capacitance in the circuit as well. In the present embodiment, as the method of adjusting the capacitance, as shown in FIG. 2, the surface of the insulation layer 20 covering the surface of the terminal 12a is printed with conductive paste to form the electrodes 28. FIG. 4 shows the sectional configuration of the terminal 12a, insulation layer 20 (region shown by hatching), and an electrode 28. The electrode 28, conductor terminal 12a, and insulation layer 20 sandwiched between the two form a capacitor.

The capacitor can change the capacitance by changing the area of the electrode 28 formed at the terminal 12a. By connecting the electrode 28 to the wiring 18a, it is possible to adjust the capacitance acting on the IC card. The capacitance can be easily adjusted by changing the printing pattern when coating the conductive paste.

The IC card can be obtained by placing the semiconductor device on the flat coil 10, then using plastic films to sandwich the flat coil 10 from the two sides and heat-press bonding the plastic films to form a thin card shape.

Note that in the present embodiment, the semiconductor device 16 and flat coil 10 are electrically connected using a conductive adhesive, but of course it is also possible to use wire bonding or another connection method. Further, the form of the IC card may be not only the usual card form, but also a small-sized product used as for example a tag. The non-contact type IC card according to the present invention is provided with the adjustment coil 11 and coil body 10a as the flat coil 10, whereby it is possible to use it universally for various products without changing the form of the flat coil. There is no need to produce a flat coil separately for each product and it becomes possible to effectively reduce the production cost of the flat coil.

According to the non-contact type IC card and flat coil using this according to the present invention, since it is possible to suitably adjust the inductance of the flat coil by providing the adjustment coil at the flat coil and selecting the connection position between the semiconductor device and adjustment coil as explained above, it is possible to provide a flat coil able to be universally used for IC card products carrying different semiconductor devices and thereby enable the production costs of the flat coil and IC card to be effectively reduced. Further, by adjusting the connection position with the adjustment coil, the remarkable effect is exhibited of enabling suitable adjustment of the inductance and matching a predetermined resonance frequency.

While the invention has been described with reference to specific embodiments chosen for purpose of illustration, it should be apparent that numerous modifications could be made thereto by those skilled in the art without departing from the basic concept and scope of the invention.

The present disclosure relates to subject matter contained in Japanese Patent Application No. 2001-221655, filed on July 23, 2001, the disclosure of which is expressly incorporated herein by reference in its entirety.

## Claims

1. A non-contact type IC card carrying a semiconductor device (16) electrically connected to terminals (12a,12b) formed at an inner circumference end and an outer circumference end of a flat coil (10) having a coil body (10b) formed by winding a conductor in a flat manner, wherein
an adjustment coil (11) extends in a flat spiral shape from at least one of the terminals (12a), and
the adjustment coil (11) and the semiconductor device (16) are electrically connected.

2. A non-contact type IC card as set forth in claim 1, wherein the adjustment coil (11) has a plurality of conductors (A,B,C,D) arranged in parallel along an outer surface of the at least one terminal (12a) as a connection part (11a) for selecting a connection position with the semiconductor device (16).

3. A non-contact type IC card as set forth in claim 1 or claim 2, wherein the semiconductor device (16) is carried housed in a carrying hole (14) provided in one of the terminals (12a,12b).

4. A non-contact type IC card as set forth in any one of the preceding claims, wherein the surface of the at least one terminal (12a) is provided with an electrode (28) forming a capacitor with the terminal (12a) through an insulation layer (20), and the electrode (28) is electrically connected with the flat coil (10).

5. A non-contact type IC card as set forth in any one of the preceding claims, wherein:
the terminals (12a,12b) and the surface of the flat coil (10) between the at least one of the terminals (12a) and the adjustment coil (11) are covered by an insulation layer (20), and
the semiconductor device (16) and flat coil (10) are electrically connected through vias (19a,19b,19c) and wirings (18a,18b), the vias (19a,19b,19c) being formed by filling a conductive adhesive in via holes (22,22a,22b,24,26) provided in the insulating layer (20) and the wirings (18a,18b) being formed of a conductive adhesive on the surface of the insulating layer (20).

6. A flat coil (10) used for a non-contact type IC card formed with terminals (12a,12b) electrically connected to a semiconductor device (16) at an inner circumference end and an outer circumference end of a coil body (10a) formed by winding a conductor in a flat manner, wherein
an adjustment coil (11) electrically connected with said semiconductor device (16) at a selected one of a number of possible connection positions (A,B,C,D) extends in a flat spiral shape from at least one of the terminals (12a).

7. A flat coil as set forth in claim 6, wherein the adjustment coil (11) is provided with a connection part (11a) comprised of a plurality of conductors (A,B,C,D) arranged in parallel and forming coils along the outer surface of the at least one terminal (12a).
